(19)

Europäisches
Patentamt

European
Patent Office

Office européen
des brevets

(11) **EP 4 507 016 A1**

(12) **EUROPEAN PATENT APPLICATION**
published in accordance with Art. 153(4) EPC

(43) Date of publication:
**12.02.2025 Bulletin 2025/07**

(21) Application number: **23854096.7**

(22) Date of filing: **27.06.2023**

(51) International Patent Classification (IPC):
***H01M 4/04*** (2006.01)

(52) Cooperative Patent Classification (CPC):
**H01M 4/04; H01M 10/05;** Y02E 60/10

(86) International application number:
**PCT/CN2023/102802**

(87) International publication number:
**WO 2024/037191 (22.02.2024 Gazette 2024/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.08.2022 CN 202210988890**

(71) Applicant: **Contemporary Amperex Technology
Co., Limited
Ningde, Fujian 352100 (CN)**

(72) Inventors:
• LUO, Yu
  **Ningde, Fujian 352100 (CN)**
• WU, Kun
  **Ningde, Fujian 352100 (CN)**
• XIAO, Qiuhua
  **Ningde, Fujian 352100 (CN)**

(74) Representative: **Thoma, Michael
Lorenz Seidler Gossel
Rechtsanwälte Patentanwälte
Partnerschaft mbB
Widenmayerstraße 23
80538 München (DE)**

(54) **MANUFACTURING METHOD AND MANUFACTURING SYSTEM FOR ELECTRODE SHEET, AND BATTERY CELL**

(57) This application provides a manufacturing method (200) and manufacturing system (600) for electrode plate, and a battery cell. The manufacturing method (200) includes: applying (210) an electrode slurry to a first surface of a current collector to form a first electrode layer on the first surface; performing (220) a first drying operation on the current collector with the first electrode layer formed thereon to dry the first electrode layer; applying (230) the electrode slurry to a second surface of the current collector after the first drying operation to form a second electrode layer on the second surface, the second surface being opposite the first surface; performing (240) a second drying operation on the current collector having the first electrode layer and the second electrode layer formed thereon to dry both the first electrode layer and the second electrode layer; and performing (250) a compensation drying operation on the second electrode layer of the current collector.

FIG. 2

## Description

### CROSS-REFERENCE TO RELATED APPLICATIONS

This application refers to Chinese Patent Application No. 202210988890.6, filed on August 17, 2022 and entitled "MANUFACTURING METHOD AND MANUFACTURING SYSTEM FOR ELECTRODE PLATE, AND BATTERY CELL", which is incorporated herein by reference in its entirety.

### TECHNICAL FIELD

This application relates to field of battery technologies, and in particular, to a manufacturing method and manufacturing system for electrode plate, and a battery cell.

### BACKGROUND

An electrode assembly is an important component of a battery cell. The electrode assembly is generally formed by stacking or winding a plurality of electrode plates. Two sides of the electrode plate are coated to form electrode layers. The electrode layers can improve the service life of the electrode, and the stability of the electrode surface coating directly determines whether the electrode can be used for a long time.

However, the following problem exists in the processing and manufacturing process of existing coated electrodes: electrode plates that need to be coated with a composite coating slurry on two sides need to be operated in batches, and the electrode plates are coated and dried first on one side, and then coated and dried on the other side. This drying method cannot ensure a same degree of drying on the two sides. If the coating on the two sides of the electrode plate is unevenly dried, the production quality of the electrode will be seriously affected.

### SUMMARY

This application is intended to resolve at least one of the technical problems in the prior art. In view of this, an objective of this application is to propose a manufacturing method and manufacturing system for electrode plate, and a battery cell, to alleviate the problem that a conventional drying method cannot ensure a same degree of drying on two sides of an electrode plate.

An embodiment of a first aspect of this application provides a manufacturing method for electrode plate, including: applying an electrode slurry to a first surface of a current collector to form a first electrode layer on the first surface; performing a first drying operation on the current collector with the first electrode layer formed thereon to dry the first electrode layer; applying the electrode slurry to a second surface of the current collector after the first drying operation to form a second electrode layer on the second surface, the second surface being opposite the first surface; performing a second drying operation on the current collector having the first electrode layer and the second electrode layer formed thereon to dry both the first electrode layer and the second electrode layer; and performing a compensation drying operation on the second electrode layer of the current collector.

In the technical solution of this application, the provision of the compensation drying operation may compensate for the first drying operation not experienced by the second electrode layer compared to the first electrode layer, thereby ensuring a consistent drying effect for the first electrode layer and the second electrode layer. Therefore, the surface density of the electrode layers on the two sides of the finally manufactured electrode plate is basically the same, thereby improving the quality of the finally produced electrode assembly.

In some embodiments, the compensation drying operation includes: obtaining a first surface density sum of the first electrode layer and the second electrode layer after the second drying operation and before the compensation drying operation; determining relevant parameters for the compensation drying operation based on a first difference between the first surface density sum and a target surface density sum, where the target surface density sum is an expected value of a sum of the surface densities of the first electrode layer and the second electrode layer after the compensation drying operation; and performing the compensation drying operation on the second electrode layer of the current collector based on the relevant parameters.

The relevant parameters for the compensation drying operation are regulated based on the first difference between the first surface density sum and the target surface density sum, so that after the compensation drying operation, the sum of the surface densities of the first electrode layer and the second electrode layer can reach the target surface density sum, which means a consistent drying effects for the second electrode layer and the first electrode layer. The method in this embodiment can accurately determine the relevant parameters for the compensation drying operation, thereby improving the compensation precision of the compensation drying operation for the second electrode layer.

In some embodiments, the relevant parameters include an operating power of a compensation drying apparatus used to perform the compensation drying operation, and the determining relevant parameters for the compensation drying operation based on a first difference between the first surface density sum and a target surface density sum includes determining the operating power based on the first difference and a pre-determined power-surface density relationship, where the power-surface density relationship represents a functional relationship between the operating power of the compensation drying apparatus and a reduced value of surface density of the second electrode layer during the compensation drying operation.

The power-surface density relationship can be pre-determined, so as to determine an exact relationship between the reduced value of surface density and the operating power P of the compensation drying apparatus. When the operating power value is determined based on the power-surface density relationship, the operating power that the compensation drying apparatus should be set to can be obtained more accurately, further improving the compensation precision of the compensation drying operation for the second electrode layer.

In some embodiments, the manufacturing method further includes: obtaining a second surface density sum of the first electrode layer and the second electrode layer during the compensation drying operation; feedback regulating the relevant parameters for the compensation drying operation based on at least a second difference between the second surface density sum and the target surface density sum, where the target surface density sum is an expected value of a sum of the surface densities of the first electrode layer and the second electrode layer after the compensation drying operation; and continuing the compensation drying operation on the second electrode layer of the current collector based on the regulated relevant parameters for the compensation drying operation.

The surface density during the compensation drying operation is used to further feedback regulate the relevant parameters for the compensation drying operation, so that the relevant parameters ultimately reach target values. The feedback regulated relevant parameters can be used in subsequent electrode plate production processes. In the subsequent production processes, the use of the feedback regulated relevant parameters makes the compensation of the compensation drying operation for the second electrode layer more precise.

In some embodiments, the relevant parameters include the operating power of the compensation drying apparatus, where the feedback regulating the relevant parameters for the compensation drying operation based on at least a second difference between the second surface density sum and the target surface density sum includes regulating the operating power of the compensation drying apparatus using a PID control algorithm with the second difference as a deviation value.

For relevant parameters that can be expressed as numerical values, such as operating power or temperature, the second difference can be used as a deviation value for PID control calculations to obtain more accurate values of the relevant parameters.

In some embodiments, the performing the compensation drying operation on the second electrode layer of the current collector further includes determining the target surface density sum, where the determining the target surface density sum includes: obtaining a third surface density of the first electrode layer after the first drying operation and before the second drying operation; determining a reduced value of surface density of the first electrode layer during the first drying operation based on the third surface density and a fourth surface density of the first electrode layer before the first drying operation; and determining the target surface density sum based on at least the reduced value of surface density.

By comparing the surface density values of the electrode plate before and after the first drying operation, the reduced value of surface density of the first electrode layer during the first drying operation can be obtained, and based on the reduced value, the target surface density sum is calculated, making the determined target surface density sum closer to the expected value of a sum of the surface densities of the first electrode layer and the second electrode layer after the compensation drying operation, thereby subsequently obtaining more precise relevant parameters for the compensation drying operation.

In some embodiments, the performing the compensation drying operation on the second electrode layer of the current collector further includes stopping the compensation drying operation in response to the second difference being less than a pre-set difference threshold.

When it is determined that the second difference is less than the pre-set difference threshold, feedback regulation of the relevant parameters can be stopped. In this way, the computational load of a relevant controller can be reduced while ensuring the ideal compensation drying operation is achieved.

An embodiment of a second aspect of this application provides a manufacturing system for electrode plate, including: a first coating apparatus, configured to apply an electrode slurry to a first surface of a current collector to form a first electrode layer on the first surface; a first drying apparatus, configured to perform a first drying operation on the current collector with the first electrode layer formed thereon to dry the first electrode layer; a second coating apparatus, configured to apply the electrode slurry to a second surface of the current collector after the first drying operation to form a second electrode layer on the second surface, the second surface being opposite the first surface; a second drying apparatus, configured to perform a second drying operation on the current collector having the first electrode layer and the second electrode layer formed thereon to dry both the first electrode layer and the second electrode layer; and a compensation drying apparatus, configured to perform a compensation drying operation on the second electrode layer of the current collector.

The provision of the compensation drying apparatus may compensate for the first drying operation not experienced by the second electrode layer compared to the first electrode layer, thereby ensuring a consistent drying effect for the first electrode layer and the second electrode layer. Therefore, the surface density of the electrode layers on the two sides of the finally manufactured electrode plate is basically the same, thereby improving the quality of the finally produced electrode assembly.

In some embodiments, the manufacturing system further includes: a first surface density measuring apparatus, configured to measure a first surface density sum of the first electrode layer and the second electrode layer after the second drying operation and before the compensation drying operation; and a control apparatus, configured to determine relevant parameters for the compensation drying operation based on a first difference between the first surface density sum and a target surface density sum, where the target surface density sum is an expected value of a sum of the surface densities of the first electrode layer and the second electrode layer after the compensation drying operation; where the compensation drying apparatus is further configured to perform the compensation drying operation on the second electrode layer of the current collector based on the relevant parameters.

The relevant parameters for the compensation drying operation are regulated based on the first difference between the first surface density sum and the target surface density sum, so that after the compensation drying operation, the sum of the surface densities of the first electrode layer and the second electrode layer can reach the target surface density sum, which means a consistent drying effects for the second electrode layer and the first electrode layer. The method in this embodiment can accurately determine the relevant parameters for the compensation drying operation, thereby improving the compensation precision of the compensation drying operation for the second electrode layer.

In some embodiments, the relevant parameters include an operating power of a compensation drying apparatus used to perform the compensation drying operation, and the control apparatus is further configured to determine the operating power based on the first difference and a pre-determined power-surface density relationship, where the power-surface density relationship represents a functional relationship between the operating power of the compensation drying apparatus and a reduced value of surface density of the second electrode layer during the compensation drying operation.

The relevant parameters for the compensation drying operation are regulated based on the first difference between the first surface density sum and the target surface density sum, so that after the compensation drying operation, the sum of the surface densities of the first electrode layer and the second electrode layer can reach the target surface density sum, which means a consistent drying effects for the second electrode layer and the first electrode layer. The system in this embodiment can accurately determine the relevant parameters for the compensation drying operation, thereby improving the compensation precision of the compensation drying operation for the second electrode layer.

In some embodiments, the manufacturing system further includes a second surface density measuring apparatus configured to obtain a second surface density sum of the first electrode layer and the second electrode layer during the compensation drying operation, where the control apparatus is further configured to feedback regulate the relevant parameters for the compensation drying operation based on at least a second difference between the second surface density sum and the target surface density sum, where the target surface density sum is an expected value of a sum of the surface densities of the first electrode layer and the second electrode layer after the compensation drying operation; and the compensation drying apparatus is further configured to continue the compensation drying operation on the second electrode layer of the current collector based on the regulated relevant parameter for the compensation drying operation.

The surface density of the electrode plate during the compensation drying operation is used to further feedback regulate the relevant parameters for the compensation drying operation, and the feedback regulated relevant parameters can be used in subsequent electrode plate production processes. In the subsequent production processes, the use of the feedback regulated relevant parameters makes the compensation of the compensation drying operation for the second electrode layer more precise.

In some embodiments, the relevant parameters include the operating power of the compensation drying apparatus. The control apparatus is further configured to regulate the operating power of the compensation drying apparatus using a PID control algorithm with the second difference as a deviation value, to reduce the second difference for subsequently manufactured electrode plates.

For relevant parameters that can be expressed as numerical values, such as operating power or temperature, the second difference can be used as a deviation value for PID control calculations to obtain more accurate values of the relevant parameters.

In some embodiments, the manufacturing system further includes a third surface density measuring apparatus configured to measure a third surface density of the first electrode layer after the first drying operation and before the second drying operation; where the control apparatus is further configured to determine a reduced value of surface density of the first electrode layer during the first drying operation based on the third surface density and a fourth surface density of the first electrode layer before the first drying operation, and to determine the target surface density sum based on at least the reduced value of surface density.

By comparing the surface density values of the electrode plate before and after the first drying operation, the reduced value of surface density of the first electrode layer during the first drying operation can be obtained, and based on the reduced value, the target surface density sum is calculated, making the determined target surface density sum closer to the expected value of a sum of the surface densities of the first electrode layer and the second electrode layer after the compensation drying operation, thereby subsequently obtaining more precise relevant parameters for the compensation drying operation.

In some embodiments, the control apparatus is further configured to stop feedback regulation of the relevant parameters in response to the second difference being less than a pre-set difference threshold.

When it is determined that the second difference is less than the pre-set difference threshold, the control apparatus can stop feedback regulation of the relevant parameters. In this way, the computational load of a relevant control apparatus can be reduced while ensuring the ideal compensation drying operation is achieved.

In some embodiments, the manufacturing system further includes: a conveying apparatus configured to drive the electrode plate to sequentially pass through the first coating apparatus, the first drying apparatus, the second coating apparatus, the second drying apparatus, and the compensation drying apparatus.

The system uses the conveying apparatus to drive the electrode plate to undergo various operations in sequence, enabling the entire electrode plate manufacturing process to be automated, thus avoiding the use of manual transportation of the electrode plate and improving the operational efficiency of the system.

In some embodiments, the manufacturing system further includes an oven, where the oven includes an upper layer section and a lower layer section, the first drying apparatus is one of the upper layer section and the lower layer section, and the second drying apparatus is the other of the upper layer section and the lower layer section.

Since the first drying apparatus and the second drying apparatus are the upper and lower layers of the oven, their lengths, dimensions, and ambient temperatures are almost identical. This can ensure that the drying effects of the first drying operation and the second drying operation are basically consistent, thereby avoiding deviations in the surface density of the finally formed first electrode layer and second electrode layer.

In some embodiments, the compensation drying apparatus is an infrared lamp, where the infrared lamp is configured to irradiate the second surface of the electrode plate.

The system uses the infrared lamp to irradiate the second surface of the electrode plate to complete the compensation drying operation. As compared with other thermal radiation drying that affects the two sides of the electrode plate, the infrared lamp can only dry the second electrode layer of the electrode plate, avoiding any impact on the first electrode layer.

An embodiment of a third aspect of this application provides a battery cell, including the electrode plate manufactured using the foregoing method.

The foregoing description is merely an overview of the technical solution of this application. For a better understanding of the technical means in this application such that they can be implemented according to the content of the specification, and to make the above and other objectives, features, and advantages of this application more obvious and easier to understand, the following describes specific embodiments of this application.

## BRIEF DESCRIPTION OF DRAWINGS

In the accompanying drawings, unless otherwise specified, the same reference signs throughout a plurality of accompanying drawings indicate the same or similar components or elements. These accompanying drawings may not necessarily be drawn to scale. It should be understood that these accompanying drawings illustrate only some embodiments disclosed in this application and should not be construed as limitations on the scope of this application. To describe the technical solutions in the embodiments of this application more clearly, the following briefly describes the accompanying drawings required for describing the embodiments of this application. Apparently, the accompanying drawings in the following descriptions show merely some embodiments of this application, and persons of ordinary skill in the art may still derive other drawings from the accompanying drawings without creative efforts.

FIG. 1 is a schematic diagram of an electrode assembly of a battery cell according to some embodiments of this application;
FIG. 2 is a schematic diagram of a manufacturing method for electrode plate according to some embodiments of this application;
FIG. 3 is a schematic diagram of a compensation drying method according to some embodiments of this application;
FIG. 4 is a schematic diagram of a method for feedback regulation of relevant parameters during a compensation drying operation according to some embodiments of this application;
FIG. 5 is a schematic diagram of a method for determining a target surface density sum according to some embodiments of this application; and
FIG. 6 is a schematic diagram of a manufacturing system for electrode plate according to some embodiments of this application.

Description of reference signs

electrode assembly 10, anode electrode plate 11, cathode electrode plate 12, separator 13, tab 14, anode tab 14a, cathode tab 14b;
manufacturing system 600, first coating apparatus 610, first nozzle 611, oven 620, first drying apparatus 621, second coating apparatus 630, second nozzle 631, second drying apparatus 622, compensation drying apparatus 640, conveying apparatus 650, roller 651, first surface density measuring apparatus 661, second surface density measuring apparatus 662, third surface density measuring apparatus 663, and fourth surface density measuring apparatus 664.

## DESCRIPTION OF EMBODIMENTS

The following describes in detail the embodiments of technical solutions of this application with reference to the accompanying drawings. The following embodiments are merely used to describe the technical solutions in this application more explicitly, and therefore they are merely used as examples and do not constitute any limitation on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "comprise", "have", and any other variations thereof in the specification, claims and brief description of drawings of this application are intended to cover non-exclusive inclusions.

In the description of the embodiments of this application, the technical terms "first", "second", and the like are merely intended to distinguish between different objects, and shall not be understood as any indication or implication of relative importance or any implicit indication of the number, sequence or primary-secondary relationship of the technical features indicated. In the description of the embodiments of this application, "a plurality of" means at least two unless otherwise specifically stated.

In this specification, reference to "embodiment" means that specific features, structures or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. Persons skilled in the art explicitly and implicitly understand that the embodiments described herein may be combined with other embodiments.

In the descriptions of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the descriptions of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitation on the embodiments of this application.

In the description of the embodiments of this application, unless otherwise specified and defined explicitly, the terms "mounting", "connection", "join", and "fastening" should be understood in their general senses. For example, they may refer to a fixed connection, a detachable connection, or an integral connection, may refer to a mechanical connection or electrical connection, and may refer to a direct connection, an indirect connection via an intermediate medium, an internal communication between two components, or an interactive relationship between two components. Persons of ordinary skill in the art can understand specific meanings of these terms in the embodiments of this application as suitable to specific situations.

Currently, from a perspective of market development, application of power batteries is being more extensive. Power batteries have been not only used in energy storage power supply systems such as hydroelectric power plants, heat power plants, wind power plants, and solar power plants, but also widely used in many other fields including electric transportation tools such as electric bicycles, electric motorcycles, and electric vehicles, military equipment, and aerospace. With the continuous expansion of application fields of power batteries, market demands for the power batteries are also expanding.

A power battery generally includes a plurality of battery cells, and the electrode assembly of a battery cell is formed by winding or folding a plurality of electrode plates (positive electrode plates and negative electrode plates). Therefore, electrode plates are fundamental building blocks of power batteries. The related production process of electrode plates is as follows: first, preparing a sheet-like current collector; then applying an electrode slurry on two side surfaces of the current collector; and finally drying the coated electrode slurry to form an electrode plate with electrode layers on the two sides.

The applicant of this application has noted that during the related production process of electrode plates, a first surface of a current collector is coated first, then dried, then a second surface is coated, and a second drying is performed. During the second drying, the first surface is also inevitably be dried once again. Therefore, during the entire production process, the first surface is dried twice, resulting in inconsistent drying degrees between the first surface and the second surface and different surface densities in the electrode layers formed on the two side surfaces, which will eventually affect the performance of the battery cell.

To mitigate the problem of cell swelling force, the applicant has found through research that after the second drying, a compensation drying operation can be performed on the electrode layer on the second surface to ensure consistent drying degrees between the electrode layer on the first surface and the electrode layer on the second surface, thereby making the surface densities of the two electrode layers consistent and improving the performance of the finally obtained battery cell.

Based on the above considerations, to solve the problem of inconsistent drying degrees of the electrode layers on two side surfaces of the electrode plate, the applicant have designed, through in-depth research, a manufacturing method for electrode plate, in which a compensation drying operation is performed on the electrode layer on the second surface after the second drying, so that the surface densities of the electrode layers on two side surfaces of the electrode plate can be made consistent.

In addition, the surface densities of the electrode layers on the two side surfaces of the electrode plate can be measured during the production process of the electrode plate. Relevant parameters for the compensation drying operation are determined based on the surface densities of the electrode layers to improve the accuracy of the compensation drying operation and ensure consistent drying degrees of the electrode layers on the two side surfaces.

The method and system disclosed in the embodiments of this application can be used to manufacture electrode plates, and the electrode plates can be used in battery cells. The battery cells can be used without limitation in electric apparatuses such as vehicles, ships, or aircraft. The foregoing battery cells, battery, and the like can be used to constitute a power supply system of the electric apparatus.

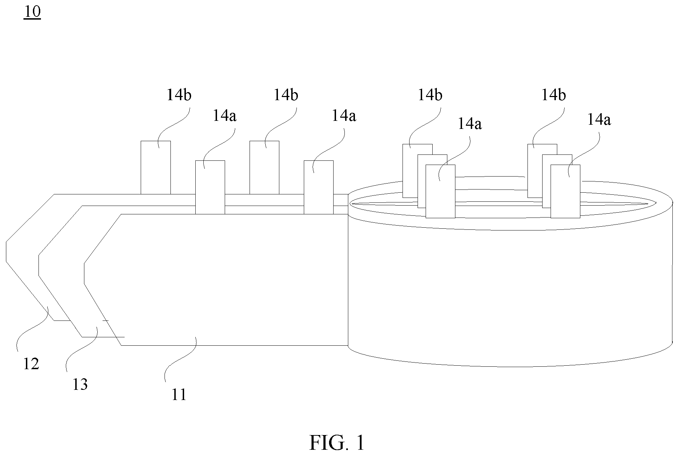

Referring to FIG. 1, FIG. 1 is a schematic diagram of an electrode assembly 10 of a battery cell according to some embodiments of this application. The electrode assembly 10 is a component in the battery cell in which electrochemical reactions occur. The electrode assembly 10 is mainly formed by winding or laminating a positive electrode plate 11 and a negative electrode plate 12, and a separator 13 is generally provided between the anode electrode plate 11 and the cathode electrode plate 12. Parts of the anode electrode plate 11 and the cathode electrode plate 12 with active substances constitute a body portion of the electrode assembly 10, while parts of the anode electrode plate 11 and the cathode electrode plate 12 without active substances each constitute a tab 14. An anode tab 14a and a cathode tab 14b may both be located at one end of the body portion of the electrode assembly 10 or be located at two ends of the body portion respectively. During charge and discharge of the battery, a positive electrode active substance and a negative electrode active substance react with an electrolyte, and the tabs 14 are connected to the electrode terminals to form a current loop.

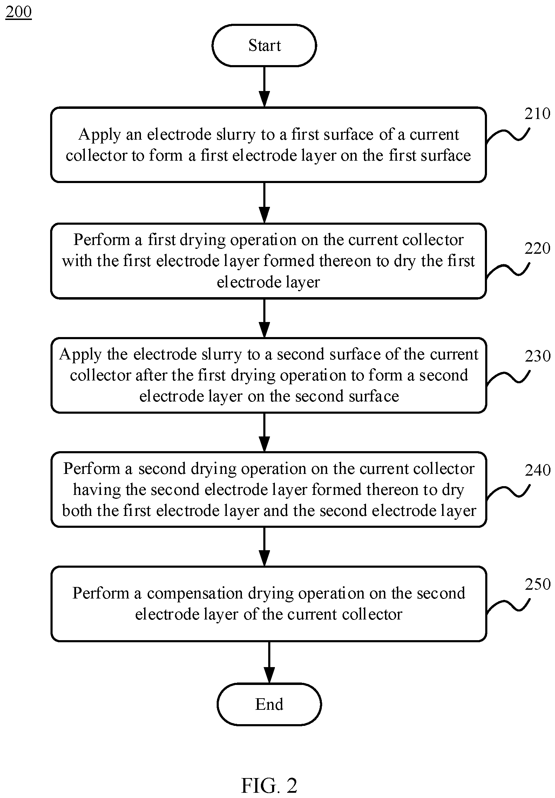

FIG. 2 is a schematic diagram of a manufacturing method 200 for electrode plate according to an embodiment of this disclosure. As shown in FIG. 2, the manufacturing method 200 includes the following steps:

Step 210. Applying an electrode slurry to a first surface of a current collector to form a first electrode layer on the first surface;

Step 220. Performing a first drying operation on the current collector with the first electrode layer formed thereon to dry the first electrode layer;

Step 230. Applying the electrode slurry to a second surface of the current collector after the first drying operation to form a second electrode layer on the second surface, the second surface being opposite the first surface;

Step 240. Performing a second drying operation on the current collector having the second electrode layer and the second electrode layer formed thereon to dry both the first electrode layer and the second electrode layer; and

Step 250. Performing a compensation drying operation on the second electrode layer of the current collector.

The foregoing method 200 can be used to prepare cathode and/or anode plates for electrode assemblies of battery cells. In preparing cathode electrode plates, the slurry coated in step 210 and step 230 is a cathode slurry; and in preparing anode electrode plates, the slurry coated in step 210 and step 230 is an anode slurry. The current collector may be copper foil or aluminum foil, and materials of the electrode slurry include but are not limited to an active material and a solvent. In step 210 and step 230, spraying, brushing, or other suitable methods can be used to coat the first surface and the second surface of the current collector, respectively. Coating conditions used in these two coating operations can be the same (for example, the degree of coating, coating range, and coating time are all the same) to ensure that the first electrode layer formed on the first surface and the second electrode layer formed on the second surface are basically consistent.

In step 220, the current collector with the first surface coated in step 210 can be placed in an oven for a first drying (that is, a first drying operation). During the first drying operation, the first electrode layer has a reduced value of surface density due to being dried. The reduced value of surface density is related to operating parameters for the first drying operation, such as drying temperature, drying time, or other parameters. In the field of engineering materials, surface density is the mass per unit area of a substance of a specified thickness.

In step 240, the current collector with the first surface and the second surface both coated with the slurry in step 230 can be placed in an oven for a second drying (that is, a second drying operation). During the second drying operation, both the first electrode layer and the second electrode layer are dried. Therefore, the surface density value of the second electrode layer is reduced, and the surface density of the first electrode layer is further reduced on the basis of the reduction of the surface density in the first drying operation. The reduced value of surface density is related to the operating parameters for the second drying operation, such as the drying temperature, drying time, or other parameters. The operating parameters for the first drying operation and the second drying operation may be the same to ensure consistent drying effects.

Because the first electrode layer undergoes two drying operations (that is, the first drying operation and the second drying operation) while the second electrode layer undergoes only one drying operation (that is, the second drying operation), in step 250, a compensation drying operation needs to be added for the second electrode layer to make the drying effects for the first electrode layer and the second electrode layer consistent. The compensation drying operation can dry only the second electrode layer without affecting the first electrode layer. The apparatus for performing the foregoing compensation drying operation may be, for example, an infrared apparatus that emits infrared rays. The apparatus can irradiate only the second electrode layer to avoid affecting the first electrode layer.

The provision of the compensation drying operation may compensate for the first drying operation not experienced by the second electrode layer compared to the first electrode layer, thereby ensuring a consistent drying effect for the first electrode layer and the second electrode layer. Therefore, the surface density of the electrode layers on the two sides of the finally manufactured electrode plate is basically the same, thereby improving the quality of the finally produced electrode assembly.

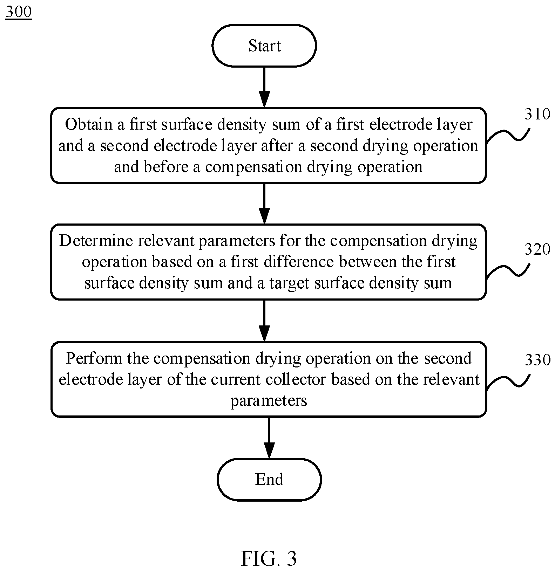

FIG. 3 is a schematic diagram of a compensation drying method 300 according to an embodiment of this disclosure. As shown in FIG. 3, the method 300 includes the following steps:

Step 310. Obtaining a first surface density sum of the first electrode layer and the second electrode layer after the second drying operation and before the compensation drying operation;

Step 320. Determining relevant parameters for the compensation drying operation based on a first difference between the first surface density sum and a target surface density sum, where the target surface density sum is an expected value of a sum of the surface densities of the first electrode layer and the second electrode layer after the compensation drying operation; and

Step 330. Performing the compensation drying operation on the second electrode layer of the current collector based on the relevant parameters.

In step 310, the first surface density sum of the first electrode layer and the second electrode layer can be obtained by measurement. For example, the first surface density sum can be measured using a surface density meter. The surface density meter utilizes the absorption and backscattering effects of $\beta$-rays penetrating substances to achieve non-destructive and non-contact measurement of the surface density of a film-like material. The surface density meter can be placed at a position where the electrode plate has just undergone the second drying operation and is about to undergo a compensation drying operation, so as to be used for measuring the first surface density sum. It should be added that since the current collector also has a certain thickness, the surface density meter may not be able to directly measure the first surface density sum, but it can measure a total density of the current collector, the first electrode layer, and the second electrode layer. In this case, the total density of the three can be used to subtract the surface density of the current collector (the surface density of the current collector can be obtained in advance and remains unchanged during various drying operations), to obtain the first surface density sum.

The target surface density sum is an expected value of the sum of the surface densities of the first electrode layer and the second electrode layer after the compensation drying operation. The foregoing target surface density sum may be pre-determined. When a sum of the surface densities of the first electrode layer and the second electrode layer after the compensation drying operation can reach the target surface density sum, it is proved that the second electrode layer has reached a same drying degree as the first electrode layer.

In step 320, the first difference represents a gap between the sum of the surface densities of the first electrode layer and the second electrode layer and the target surface density sum before the compensation drying operation is performed. The gap will determine the relevant parameters for the compensation drying operation. The foregoing relevant parameters may include, for example, the drying temperature, the drying time, the operating power of a compensation drying apparatus used to perform the compensation drying operation, or the like. How to determine the relevant parameters based on the first difference will be described in detail below with a specific example.

In the example, a relevant parameter is the operating power of the compensation drying apparatus used to perform the compensation drying operation. As described above, the compensation drying operation is used to dry the second electrode layer. Therefore, during the compensation drying operation, the surface density value of the second electrode layer will be reduced. Generally speaking, when the compensation drying apparatus has a greater operating power, the surface density value of the second electrode layer is reduced more. Assume the following relationship:

$$\Delta\rho = K \times P + X, \dots\dots\dots\dots\dots\dots\dots\dots\dots\dots\dots\dots(1)$$

where $\Delta\rho$ represents the reduced value of surface density of the second electrode layer, P represents the operating power of the compensation drying apparatus, and K and X are constants, $\Delta\rho$ can be set equal to the first difference, which means that the reduced value of the second electrode layer during the compensation drying operation is exactly equal to the first difference. The operating power P at which the compensation drying apparatus should be set to can be obtained by solving the foregoing formula (1).

In step 330, the compensation drying operation is performed on the second electrode layer of the current collector based on the relevant parameters (such as, the operating power of the compensation drying apparatus) determined in step 320. After the compensation drying operation, the sum of the surface densities of the first electrode layer and the second electrode layer will reach the target surface density sum.

The relevant parameters for the compensation drying operation are regulated based on the first difference between the first surface density sum and the target surface density sum, so that after the compensation drying operation, the sum of the surface densities of the first electrode layer and the second electrode layer can reach the target surface density sum, which means a consistent drying effects for the second electrode layer and the first electrode layer. The method in this embodiment can accurately determine the relevant parameters for the compensation drying operation, thereby improving the compensation precision of the compensation drying operation for the second electrode layer.

In some embodiments, the operating power may be determined based on the first difference and a pre-determined power-surface density relationship, where the power-surface density relationship represents a functional relationship between the operating power of the compensation drying apparatus and a reduced value of surface density of the second electrode layer during the compensation drying operation.

As shown in the foregoing formula (1), there is a linear relationship between the operating power P of the compensation drying apparatus and the reduced value $\Delta\rho$ of surface density of the second electrode layer during the compensation drying operation. Therefore, the operating power can be determined based on the pre-determined power-surface density relationship. The constants K and X in formula (1) can be determined by fitting experimental data.

It should be added that while in this embodiment, the reduced value of surface density of the second electrode layer and the operating power of the compensation drying apparatus have a positive linear relationship, in other embodiments, the two may alternatively have another type of functional relationship, such as quadratic relationship, exponential decay relationship, or the like.

In this embodiment, the power-surface density relationship can be pre-determined, so as to determine an exact relationship between the reduced value of surface density and the operating power P of the compensation drying apparatus. When the operating power value is determined based on the power-surface density relationship, the operating power that the compensation drying apparatus should be set to can be obtained more accurately, further improving the compensation precision of the compensation drying operation for the second electrode layer.

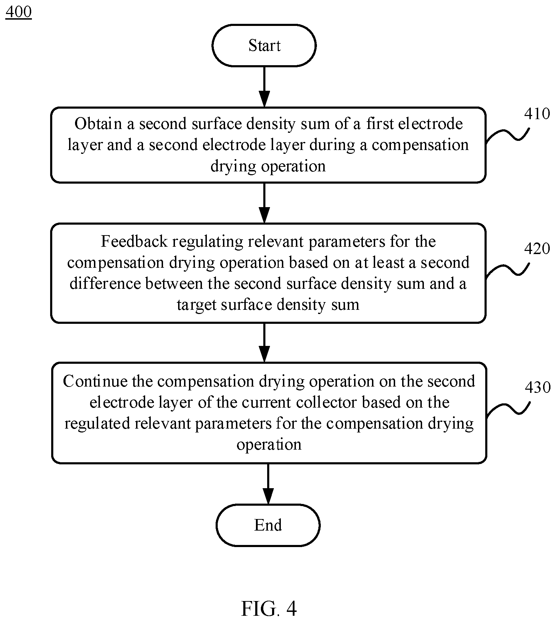

FIG. 4 is a schematic diagram of a method 400 for feedback regulation of relevant parameters during a compensation drying operation according to an embodiment of this disclosure. As shown in FIG. 4, a method 400 includes the following steps:

Step 410. Obtaining a second surface density sum of the first electrode layer and the second electrode layer during the compensation drying operation;

Step 420. Feedback regulating relevant parameters for the compensation drying operation based on at least a second difference between the second surface density sum and a target surface density sum, where the target surface density sum is an expected value of a sum of the surface densities of the first electrode layer and the second electrode layer after the compensation drying operation; and

Step 430. Continuing the compensation drying operation on the second electrode layer of the current collector based on the regulated relevant parameters for the compensation drying operation.

In step 410, a surface density meter can be placed at the position where the electrode plate has undergone the compensation drying operation, so as to be used for measuring a second surface density sum of the first electrode layer and the second electrode layer during the compensation drying operation.

During the compensation drying operation, the sum of the surface densities of the first electrode layer and the second electrode layer may still have a gap with the target surface density sum. Even if the relevant parameters are regulated during the compensation drying operation, it cannot be completely ensured that the sum of the surface densities of the first electrode layer and the second electrode layer is exactly consistent with the target surface density sum after the compensation drying operation. For example, such a problem that may result from an inaccuracy in the foregoing power-surface density relationship. Therefore, in step 420, the relevant parameters for the compensation drying operation can be further feedback regulated, and the feedback regulated relevant parameters allow the compensation drying operation to compensate for the second electrode layer more precisely. The feedback regulated relevant parameters can also be used in subsequent electrode plate production processes.

The feedback regulation may be present throughout the course of the entire compensation drying operation. At each moment, the second difference for a current batch of electrode plates can be used to feedback regulate the relevant parameters for a current compensation drying operation. After multiple feedback regulations, the relevant parameters will reach the target value, meaning that the sum of the surface densities of the first electrode layer and the second electrode layer after the compensation drying operation will be approximately equal to the target surface density sum.

In the method of this embodiment, the surface density during the compensation drying operation is used to further feedback regulate the relevant parameters for the compensation drying operation, so that the relevant parameters ultimately reach target values. The feedback regulated relevant parameters can also be used in subsequent electrode plate production processes. In the subsequent production processes, the use of the feedback regulated relevant parameters makes the compensation of the compensation drying operation for the second electrode layer more precise.

In some embodiments, the relevant parameters include the operating power of the compensation drying apparatus. The feedback regulation includes regulating the operating power of the drying apparatus using a PID control algorithm with the second difference as a deviation value, to reduce the second difference for subsequently manufactured electrode plates.

The PID control algorithm is a control algorithm that combines proportional, integral, and differential aspects. The PID control algorithm is well suitable for determining the foregoing relevant parameters, especially in case of uncertainty in the relationship between the relevant parameters and the reduced value of surface density of the second electrode layer during the compensation drying operation. The essence of PID control is to perform operations based on the input deviation value and according to a proportional, integral, and differential functional relationship. A result of the operations is used to control an output of the operating power of the compensation drying apparatus.

In this embodiment, the second difference can be used as a deviation value for PID control. After multiple rounds of feedback regulation, an ideal value of the operating power of the compensation drying apparatus is obtained.

For relevant parameters that can be expressed as numerical values, such as operating power or temperature, the second difference can be used as a deviation value for PID control calculations to obtain more accurate values of the relevant parameters.

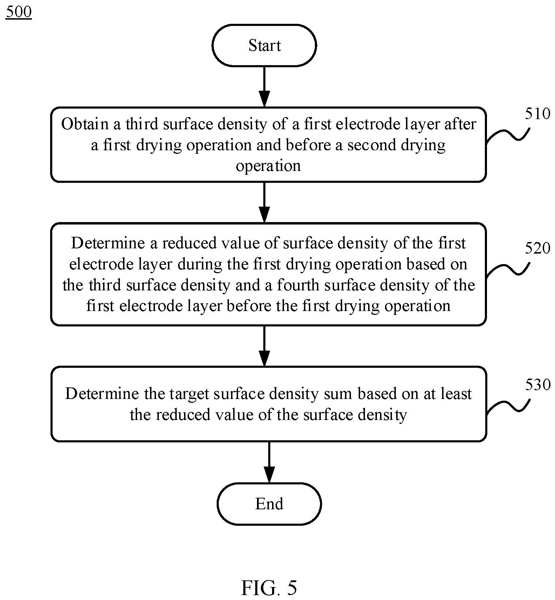

FIG. 5 is a schematic diagram of a method 500 for determining a target surface density sum according to an embodiment of this disclosure. This method 500 may be executed before the compensation drying operation to provide a reference for determining the relevant parameters for the compensation drying operation. This method 500 may alternatively be executed during the compensation drying operation to provide a basis for the feedback regulation of the relevant parameters. As shown in FIG. 5, a method 500 includes the following steps:

Step 510. Obtaining a third surface density of the first electrode layer after the first drying operation and before the second drying operation;
Step 520. Determining a reduced value of surface density of the first electrode layer during the first drying operation based on the third surface density and a fourth surface density of the first electrode layer before the first drying operation; and
Step 530. Determining the target surface density sum based on at least the reduced value of surface density.

The surface density meter is provided at a position after the electrode plate has undergone the first drying operation but before the second drying operation, so that in step 510, a third surface density of the first electrode layer after the first drying operation and before the second drying operation can be obtained. A fourth surface density of the first electrode layer before the first drying operation, that is, an initial surface density of the first electrode layer before any drying operation, can also be obtained by providing a surface density meter at a corresponding position. In addition, the fourth surface density may alternatively be obtained in advance and stored as a fixed value in a memory of a relevant controller.

It should be added that since the current collector also has a certain thickness, the surface density meter may not be able to directly measure the third surface density or fourth surface density, but it can measure a total density of the two, the current collector and the first electrode layer. In this case, the total density of the foregoing two can be used to subtract the surface density of the current collector (the surface density of the current collector can be obtained in advance and remains unchanged during various drying operations), to obtain the third surface density or fourth surface density.

In step 520, by comparing the surface density values of the electrode plate before and after the first drying operation, a reduced value of surface density of the first electrode layer during the first drying operation can be obtained. Since the drying effects of the second drying operation and the first drying operation are the same, it can be considered that the reduced value of surface density of the first electrode layer during the second drying operation, the reduced value of surface density of the second electrode layer, and the reduced value of surface density of the first electrode layer during the first drying operation are the same.

Assuming that the fourth surface density (that is, the initial surface density of the first electrode layer before drying) is $\rho4$ and the third surface density is $\rho3$, then the reduced value of surface density of the first electrode layer during the first drying operation $\rho h = \rho4 - \rho3$. Since the second drying operation has the same drying effects as the first drying operation, the reduced value of surface density of the first electrode layer during the second drying operation is also $\rho h$. Therefore, the final surface density of the first electrode layer of the electrode plate is $\rho4 - 2\rho h$. After the compensation drying operation, the surface density of the second electrode layer should be consistent with the surface density of the first electrode layer. Therefore, the expected final surface density of the second electrode layer of the electrode plate should also be $\rho4 - 2\rho h$. Therefore, the target surface density sum is $2(\rho4 - 2\rho h)$.

By comparing the surface density values of the electrode plate before and after the first drying operation, the reduced value of surface density of the first electrode layer during the first drying operation can be obtained, and based on the reduced value, the target surface density sum is calculated, making the determined target surface density sum closer to the expected value of a sum of the surface densities of the first electrode layer and the second electrode layer after the compensation drying operation, thereby subsequently obtaining more precise relevant parameters for the compensation drying operation.

In some embodiments where the relevant parameters are feedback regulated, the performing a compensation drying operation on the second electrode layer of the current collector further includes stopping the compensation drying operation in response to the second difference being less than a pre-set difference threshold.

The difference threshold may be a pre-set value. The second difference being less than the difference threshold indicates that the sum of the surface densities of the first electrode layer and the second electrode layer of the electrode plate in the current production during the compensation drying operation is close enough to the target surface density sum, and that no further feedback regulation is required. Therefore, the relevant parameters for the current compensation drying operation can be maintained in subsequent electrode plate production processes.

When it is determined that the second difference is less than the pre-set difference threshold, feedback regulation of the relevant parameters can be stopped. In this way, the computational load of a relevant controller can be reduced while ensuring the ideal compensation drying operation is achieved.

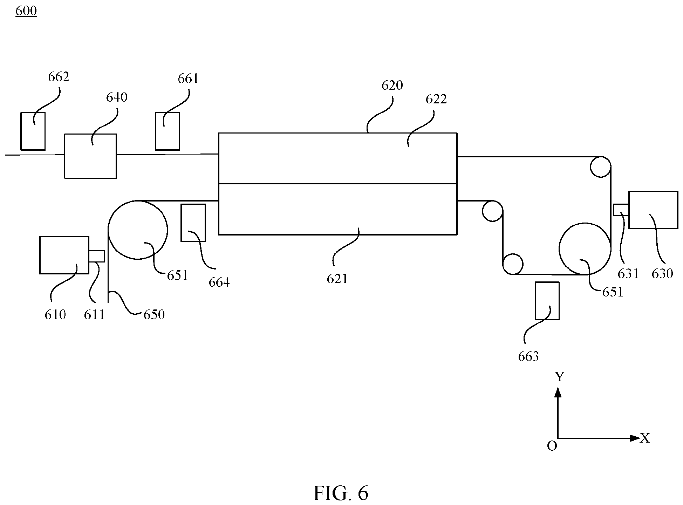

A manufacturing system for electrode plate is further provided in this disclosure. FIG. 6 is a schematic diagram of a manufacturing system 600 for electrode plate according to an embodiment of this disclosure. As shown in FIG. 6, the system 600 includes: a first coating apparatus 610, a first drying apparatus 621, a second coating apparatus 630, a second drying apparatus 622, and a compensation drying apparatus 640. The first coating apparatus 610 is configured to apply an electrode slurry to a first surface of a current collector to form a first electrode layer on the first surface. The first drying apparatus 621 is configured to perform a first drying operation on the current collector with the first electrode layer formed thereon to dry the first electrode layer. The second coating apparatus 630 is configured to apply the electrode slurry to a second surface of the current collector after the first drying operation to form a second electrode layer on the second surface, the second surface being opposite the first surface. The second drying apparatus 622 is configured to perform a second drying operation on the current collector having the first electrode layer and the second electrode layer formed thereon to dry both the first electrode layer and the second electrode layer. The compensation drying apparatus 640 is configured to perform a compensation drying operation on the second electrode layer of the current collector.

The first coating apparatus 610 is provided with a storage box for storing the electrode slurry and a first nozzle 611 for discharging the electrode slurry. When the current collector passes through the first nozzle 611, a first surface of the current collector faces the first nozzle 611. The first nozzle 611 applies the electrode slurry to a first surface of the current collector to form a first electrode layer on the first surface.

The first drying apparatus 621 may be an apparatus such as an oven or a furnace that dries the electrode plate by raising the ambient temperature. During the first drying operation, the entire electrode plate enters the first drying apparatus 621, and the first drying apparatus 621 performs the first drying operation on the current collector to dry the first electrode layer.

The second coating apparatus 630 is provided with a storage box for storing the electrode slurry and a second nozzle 631 for discharging the electrode slurry. When the current collector passes through the second nozzle 631, a second surface of the current collector faces the second nozzle 631. The second nozzle 631 is configured to apply the electrode slurry to a second surface of the current collector after the first drying operation to form a second electrode layer on the second surface.

The second drying apparatus 622 may also be an apparatus such as an oven or a furnace that dries the electrode plate by raising the ambient temperature. During the second drying operation, the entire electrode plate enters the second drying apparatus 622, and the second drying apparatus 622 performs a second drying operation on the current collector having the first electrode layer and the second electrode layer formed thereon to dry both the first electrode layer and the second electrode layer. The first drying apparatus 621 and the second drying apparatus 622 may be exactly the same in dimension and model, so that the drying effects of the first drying operation and the second drying operation are completely consistent.

The compensation drying apparatus 640 may be a thermal radiation apparatus. During the compensation drying operation, the compensation drying apparatus 640 only faces the second electrode layer of the current collector and is configured to perform the compensation drying operation on the second electrode layer of the current collector.

The provision of the compensation drying apparatus may compensate for the first drying operation not experienced by the second electrode layer compared to the first electrode layer, thereby ensuring a consistent drying effect for the first electrode layer and the second electrode layer. Therefore, the surface density of the electrode layers on the two sides of the finally manufactured electrode plate is basically the same, thereby improving the quality of the finally produced electrode assembly.

In some embodiments, the manufacturing system 600 for electrode plate further includes a first surface density measuring apparatus 661 and a control apparatus. The first surface density measuring apparatus 661 is configured to measure a first surface density sum of the first electrode layer and the second electrode layer after the second drying operation and before the compensation drying operation. The control apparatus is configured to determine relevant parameters for the compensation drying operation based on a first difference between the first surface density sum and a target surface density sum. The target surface density sum is an expected value of a sum of the surface densities of the first electrode layer and the second electrode layer after the compensation drying operation. The compensation drying apparatus 640 is further configured to perform the compensation drying operation on the second electrode layer of the current collector based on the relevant parameters.

The first surface density measuring apparatus 661 may be a surface density meter. The surface density meter utilizes the absorption and backscattering effects of $\beta$-rays penetrating substances to achieve non-destructive and non-contact measurement of the surface density of a film-like material. The control apparatus is a device with a computing function. The control apparatus is used to determine relevant parameters for the compensation drying operation, so that the compensation drying apparatus 640 operates according to the determined relevant parameters.

The relevant parameters for the compensation drying operation are regulated based on the first difference between the first surface density sum and the target surface density sum, so that after the compensation drying operation, the sum of the surface densities of the first electrode layer and the second electrode layer can reach the target surface density sum, which means a consistent drying effects for the second electrode layer and the first electrode layer. The method in this embodiment can accurately determine the relevant parameters for the compensation drying operation, thereby improving the compensation precision of the compensation drying operation for the second electrode layer.

In some embodiments, the relevant parameters include an operating power of the compensation drying apparatus 640 used to perform the compensation drying operation. The control apparatus is further configured to determine the operating power based on the first difference and a pre-determined power-surface density relationship. The power-surface density relationship represents a functional relationship between the operating power of the compensation drying apparatus 640 and a reduced value of surface density of the second electrode layer during the compensation drying operation.

The operating power of the compensation drying apparatus 640 is directly related to the drying intensity of the compensation drying operation. Generally speaking, a higher operating power indicates a higher drying intensity of the compensation drying operation. Therefore, when the compensation drying apparatus has a greater operating power, the surface density value of the second electrode layer is reduced more. There is a functional correspondence between the reduced value $\Delta\rho$ of surface density of the second electrode layer and the operating power P of the compensation drying apparatus, such as the functional correspondence shown in the above formula (1). How to determine an operating power based on a pre-determined power-surface density relationship has been described in detail above, and details are not repeated herein.

The relevant parameters for the compensation drying operation are regulated based on the first difference between the first surface density sum and the target surface density sum, so that after the compensation drying operation, the sum of the surface densities of the first electrode layer and the second electrode layer can reach the target surface density sum, which means a consistent drying effects for the second electrode layer and the first electrode layer. The system in this embodiment can accurately determine the relevant parameters for the compensation drying operation, thereby improving the compensation precision of the compensation drying operation for the second electrode layer.

In some embodiments, the manufacturing system further includes a second surface density measuring apparatus 662 configured to obtain a second surface density sum of the first electrode layer and the second electrode layer during the compensation drying operation. The control apparatus is further configured to feedback regulate the relevant parameters for the compensation drying operation based on at least a second difference between the second surface density sum and the target surface density sum. The compensation drying apparatus continues the compensation drying operation on the second electrode layer of the current collector based on the regulated relevant parameters for the compensation drying operation.

The system can further feedback regulate the relevant parameters for the compensation drying operation, and the feedback regulated relevant parameters allow the compensation drying operation to compensate for the second electrode layer more precisely. The feedback regulated relevant parameters will be used in subsequent electrode plate production processes.

The system in this embodiment uses the surface density of the finally produced electrode plate to further feedback regulate the relevant parameters for the compensation drying operation, and the feedback regulated relevant parameters can be used in subsequent electrode plate production processes. In the subsequent production processes, the use of the feedback regulated relevant parameters makes the compensation of the compensation drying operation for the second electrode layer more precise.

In some embodiments, the relevant parameters include the operating power of the compensation drying apparatus 640. The control apparatus is further configured to regulate the operating power of the compensation drying apparatus using a PID control algorithm with the second difference as a deviation value, so that subsequent compensation drying can reduce the second difference for electrode plates.

For relevant parameters that can be expressed as numerical values, such as operating power or temperature, the second difference can be used as a deviation value for PID control calculations to obtain more accurate values of the relevant parameters.

In some embodiments, the manufacturing system further includes a third surface density measuring apparatus 663 configured to measure a third surface density of the first electrode layer after the first drying operation and before the second drying operation. The control apparatus is further configured to determine a reduced value of surface density of the first electrode layer during the first drying operation based on the third surface density and a fourth surface density of the first electrode layer before the first drying operation, and to determine the target surface density sum based on at least the reduced value of surface density.

By comparing the surface density values of the electrode plate before and after the first drying operation, the reduced value of surface density of the first electrode layer during the first drying operation can be obtained, and based on the reduced value, the target surface density sum is calculated, making the determined target surface density sum closer to the expected value of a sum of the surface densities of the first electrode layer and the second electrode layer after the compensation drying operation, thereby subsequently obtaining more precise relevant parameters for the compensation drying operation.

In some embodiments, the control apparatus is further configured to stop the compensation drying operation in response to the second difference being less than a pre-set difference threshold.

When the system in this embodiment determines that the second difference is less than the pre-set difference threshold, the control apparatus can stop feedback regulation of the relevant parameters. In this way, the computational load of a relevant control apparatus can be reduced while ensuring the ideal compensation drying operation is achieved.

In some embodiments, the manufacturing system further includes: a conveying apparatus 650. The conveying apparatus 650 is configured to drive the electrode plate to sequentially pass through the first coating apparatus 610, the first drying apparatus 621, the second coating apparatus 630, the second drying apparatus 622, and the compensation drying apparatus 640.

The conveying apparatus 650, for example, may be a conveyor belt, where the electrode plate (or current collecting sheet) is placed on the conveyor belt and moves with the conveyor belt. The conveyor belt drives the electrode plate to sequentially pass through the first coating apparatus 610, the first drying apparatus 621, the second coating apparatus 630, the second drying apparatus 622, and the compensation drying apparatus 640, so that the electrode plate sequentially undergoes the first coating operation, the first drying operation, the second coating operation, the second drying operation, and the compensation drying operation. In a case where the system further includes surface density measuring apparatuses (such as the first surface density measuring apparatus 661 and the second surface density measuring apparatus 662), the conveyor belt also drives the electrode plate to pass through a measurement region of the surface density measuring apparatus. Although in this embodiment the conveying apparatus 650 is described as a conveyor belt, it is understood that in other embodiments, the conveying apparatus 650 may alternatively be other forms of conveying apparatus 650 such as a transport track. In this case, the electrode plate can be held by some clamping apparatuses and move along the transport track to sequentially undergo the foregoing operations.

The system in this embodiment uses the conveying apparatus 650 to drive the electrode plate to undergo various operations in sequence, enabling the entire electrode plate manufacturing process to be automated, thus avoiding the use of manual transportation of the electrode plate and improving the operational efficiency of the system.

In some embodiments, the manufacturing system further includes an oven 620, where the oven 620 includes an upper layer section and a lower layer section. The first drying apparatus 621 is one of the upper layer section and the lower layer section, and the second drying apparatus 622 is the other of the upper layer section and the lower layer section.

As shown in FIG. 6, the oven includes an upper layer section and a lower layer section, and these two layer sections are exactly the same in space size. The first drying apparatus 621 and the second drying apparatus 622 can be the lower layer section and the upper layer section of the oven 620, respectively. In a case where the conveying apparatus 650, for example, is a conveyor belt, the conveyor belt first extends along an X-axis direction shown in FIG. 6 into the lower layer section and travels along a length direction of the lower layer section to drive the electrode plate through the first drying operation. Subsequently, the conveyor belt travels upward (Y-axis direction shown in FIG. 6), and then extends along a negative X-axis direction shown in FIG. 6 into the upper layer section and travels along a length direction of the upper layer section to drive the electrode plate through the second drying operation. It can be understood that since the first drying apparatus 621 and the second drying apparatus 622 are the upper and lower layers of the oven 620, their lengths, dimensions, and ambient temperatures are almost identical. In this embodiment, the first drying apparatus 621 and the second drying apparatus 622 are shown as the lower layer section and the upper layer section of the oven 620, respectively. However, in some other embodiments, the first drying apparatus 621 may be the upper layer section, and the second drying apparatus 622 may be the lower layer section.

Since the first drying apparatus 621 and the second drying apparatus 622 are the upper and lower layers of the oven, their lengths, dimensions, and ambient temperatures are almost identical. This can ensure that the drying effects of the first drying operation and the second drying operation are basically consistent, thereby avoiding deviations in the surface density of the finally formed first electrode layer and second electrode layer.

In some embodiments, the compensation drying apparatus 640 is an infrared lamp. The infrared lamp is configured to irradiate the second surface of the electrode plate. In a case where the conveying apparatus 650 is a conveyor belt, when the electrode plate is transported to the compensation drying apparatus 640, its second electrode layer faces the infrared lamp, so the infrared lamp only dries the second electrode layer.

The system in this embodiment uses the infrared lamp to irradiate the second surface of the electrode plate to complete the compensation drying operation. As compared with other thermal radiation drying that affects the two sides of the electrode plate, the infrared lamp can only dry the second electrode layer of the electrode plate, avoiding any impact on the first electrode layer.

This disclosure further provides a battery cell. The battery cell includes the electrode plate manufactured according to the foregoing method, such as the electrode plate manufactured using method 200. A detailed structure of the battery cell can be referred to the description of the embodiment shown in FIG. 1, and details are not repeated herein.

As shown in FIG. 6, FIG. 6 is a schematic diagram of a manufacturing system 600 for electrode plate according to an embodiment of this disclosure. As shown in FIG. 6, the system 600 includes: a first coating apparatus 610, a fourth surface density measuring apparatus 664, an oven 620, a third surface density measuring apparatus 663, a second coating apparatus 630, a first surface density measuring apparatus 661, a second surface density measuring apparatus 662, a conveying apparatus 650, and a compensation drying apparatus 640. The conveying apparatus 650 includes a conveyor belt and multiple rollers 651 for sequentially transporting a preform (current collector) of the electrode plate to the foregoing multiple apparatuses. The oven 620 includes an upper layer section and a lower layer section. The first coating apparatus 610 applies an electrode slurry to a first surface of a current collector to form a first electrode layer on the first surface. In the lower layer section of the oven 620, a first drying operation is performed on the current collector with the first electrode layer formed thereon to dry the first electrode layer. The second coating apparatus 630 applies the electrode slurry to a second surface of the current collector after the first drying operation to form a second electrode layer on the second surface. The upper layer section of the oven 620 is configured to perform a second drying operation on the current collector having the first electrode layer and the second electrode layer formed thereon to dry both the first electrode layer and the second electrode layer. The compensation drying apparatus 640 is configured to perform a compensation drying operation on the second electrode layer of the current collector. The first surface density measuring apparatus 661, the second surface density measuring apparatus 662, the third surface density measuring apparatus 663, and the fourth surface density measuring apparatus 664 can all be surface density meters. These surface density meters are used to measure the surface density of the first electrode layer or the surface density sum of the first electrode layer and the second electrode layer at corresponding positions.

The manufacturing method 200 for electrode plates in this application can be applied to the foregoing system 600. Referring to FIG. 2, the method 200 may include the following steps:

Step 210. Applying an electrode slurry to a first surface of a current collector to form a first electrode layer on the first surface;

Step 220. Performing a first drying operation on the current collector with the first electrode layer formed thereon to dry the first electrode layer;

Step 230. Applying the electrode slurry to a second surface of the current collector after the first drying operation to form a second electrode layer on the second surface, the second surface being opposite the first surface;

Step 240. Performing a second drying operation on the current collector having the second electrode layer formed thereon to dry both the first electrode layer and the second electrode layer; and

Step 250. Performing a compensation drying operation on the second electrode layer of the current collector.

The provision of the compensation drying operation may compensate for the first drying operation not experienced by the second electrode layer compared to the first electrode layer, thereby ensuring a consistent drying effect for the first electrode layer and the second electrode layer. Therefore, the surface density of the electrode layers on the two sides of the finally manufactured electrode plate is basically the same, thereby improving the quality of the finally produced electrode assembly.

In addition, the first surface density measuring apparatus 661, the second surface density measuring apparatus 662, the third surface density measuring apparatus 663, and the fourth surface density measuring apparatus 664 are used to measure the surface density of the first electrode layer or the surface density sum of the first electrode layer and the second electrode layer at corresponding positions, so that subsequently, the relevant operating parameters for the compensation drying operation can be regulated based on these surface density sum data, thereby improving the compensation precision of the compensation drying operation. The specific regulation method has been described in detail in the methods 300 to 500 mentioned above, and details are not repeated herein.

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of this application. All such modifications and equivalent replacements shall fall within the scope of claims and specification of this application. In particular, as long as there is no structural conflict, the various technical features mentioned in the implementations can be combined in any manners. This application is not limited to the specific embodiments disclosed in this specification but includes all technical solutions falling within the scope of the claims.

## Claims

1. A manufacturing method for electrode plate, comprising:

   applying an electrode slurry to a first surface of a current collector to form a first electrode layer on the first surface;
   performing a first drying operation on the current collector with the first electrode layer formed thereon to dry the first electrode layer;
   applying the electrode slurry to a second surface of the current collector after the first drying operation to form a second electrode layer on the second surface, the second surface being opposite the first surface;
   performing a second drying operation on the current collector having the first electrode layer and the second electrode layer formed thereon to dry both the first electrode layer and the second electrode layer; and
   performing a compensation drying operation on the second electrode layer of the current collector.

2. The manufacturing method according to claim 1, wherein the compensation drying operation comprises:

   obtaining a first surface density sum of the first electrode layer and the second electrode layer after the second drying operation and before the compensation drying operation;
   determining relevant parameters for the compensation drying operation based on a first difference between the first surface density sum and a target surface density sum, wherein the target surface density sum is an expected value of a sum of the surface densities of the first electrode layer and the second electrode layer after the compensation drying operation; and
   performing the compensation drying operation on the second electrode layer of the current collector based on the relevant parameters.

3. The manufacturing method according to claim 2, wherein the relevant parameters comprise an operating power of a compensation drying apparatus used to perform the compensation drying operation, and the determining relevant parameters for the compensation drying operation based on a first difference between the first surface density sum and a target surface density sum comprises:

determining the operating power based on the first difference and a pre-determined power-surface density relationship, wherein the power-surface density relationship represents a functional relationship between the operating power of the compensation drying apparatus and a reduced value of surface density of the second electrode layer during the compensation drying operation.

4. The manufacturing method according to claim 2 or 3, further comprising:

obtaining a second surface density sum of the first electrode layer and the second electrode layer during the compensation drying operation;

feedback regulating the relevant parameters for the compensation drying operation based on at least a second difference between the second surface density sum and the target surface density sum, wherein the target surface density sum is an expected value of a sum of the surface densities of the first electrode layer and the second electrode layer after the compensation drying operation; and

continuing the compensation drying operation on the second electrode layer of the current collector based on the regulated relevant parameters for the compensation drying operation.

5. The manufacturing method according to claim 4, wherein the relevant parameters comprise the operating power of the compensation drying apparatus, and the feedback regulating the relevant parameters for the compensation drying operation based on at least a second difference between the second surface density sum and the target surface density sum comprises:

regulating the operating power of the compensation drying apparatus using a PID control algorithm with the second difference as a deviation value.

6. The manufacturing method according to any of claims 2 to 5, wherein the performing the compensation drying operation on the second electrode layer of the current collector further comprises:
determining the target surface density sum, wherein the determining the target surface density sum comprises:

obtaining a third surface density of the first electrode layer after the first drying operation and before the second drying operation;

determining a reduced value of surface density of the first electrode layer during the first drying operation based on the third surface density and a fourth surface density of the first electrode layer before the first drying operation; and

determining the target surface density sum based on at least the reduced value of surface density.

7. The manufacturing method according to any of claims 4 to 5, wherein the performing the compensation drying operation on the second electrode layer of the current collector further comprises:
stopping the compensation drying operation in response to the second difference being less than a pre-set difference threshold.

8. A manufacturing system for electrode plate, comprising:

a first coating apparatus, configured to apply an electrode slurry to a first surface of a current collector to form a first electrode layer on the first surface;

a first drying apparatus, configured to perform a first drying operation on the current collector with the first electrode layer formed thereon to dry the first electrode layer;

a second coating apparatus, configured to apply the electrode slurry to a second surface of the current collector after the first drying operation to form a second electrode layer on the second surface, the second surface being opposite the first surface;

a second drying apparatus, configured to perform a second drying operation on the current collector having the first electrode layer and the second electrode layer formed thereon to dry both the first electrode layer and the second electrode layer; and

a compensation drying apparatus, configured to perform a compensation drying operation on the second electrode layer of the current collector.

9. The manufacturing system according to claim 8, further comprising:

a first surface density measuring apparatus, configured to measure a first surface density sum of the first electrode layer and the second electrode layer after the second drying operation and before the compensation drying operation; and

a control apparatus, configured to determine relevant parameters for the compensation drying operation based on a first difference between the first surface density sum and a target surface density sum, wherein the target surface density sum is an expected value of a sum of the surface densities of the first electrode layer and the second electrode layer after the compensation drying operation; wherein

the compensation drying apparatus is further configured to perform the compensation drying operation on the second electrode layer of the current collector based on the relevant parameters.

10. The manufacturing system according to claim 9, wherein the relevant parameters comprise an operating power of the compensation drying apparatus used to perform the compensation drying operation; and

the control apparatus is further configured to determine the operating power based on the first difference and a predetermined power-surface density relationship, wherein the power-surface density relationship represents a functional relationship between the operating power of the compensation drying apparatus and a reduced value of surface density of the second electrode layer during the compensation drying operation.

11. The manufacturing system according to claim 9 or 10, further comprising:

a second surface density measuring apparatus, configured to obtain a second surface density sum of the first electrode layer and the second electrode layer during the compensation drying operation, wherein

the control apparatus is further configured to feedback regulate the relevant parameters for the compensation drying operation based on at least a second difference between the second surface density sum and the target surface density sum, wherein the target surface density sum is an expected value of a sum of the surface densities of the first electrode layer and the second electrode layer after the compensation drying operation; and

the compensation drying apparatus is further configured to continue the compensation drying operation on the second electrode layer of the current collector based on the regulated relevant parameters for the compensation drying operation.

12. The manufacturing system according to claim 11, wherein the relevant parameters comprise the operating power of the compensation drying apparatus, and

the control apparatus is further configured to regulate the operating power of the compensation drying apparatus using a PID control algorithm with the second difference as a deviation value.

13. The manufacturing system according to any of claims 9 to 12, further comprising:

a third surface density measuring apparatus, configured to measure a third surface density of the first electrode layer after the first drying operation and before the second drying operation; wherein

the control apparatus is further configured to determine a reduced value of surface density of the first electrode layer during the first drying operation based on the third surface density and a fourth surface density of the first electrode layer before the first drying operation, and to determine the target surface density sum based on at least the reduced value of surface density.

14. The manufacturing system according to any of claims 11 to 13, wherein

the control apparatus is further configured to stop the compensation drying operation in response to the second difference being less than a pre-set difference threshold.

15. The manufacturing system according to any of claims 9 to 14, further comprising:
a conveying apparatus, configured to drive the electrode plate to sequentially pass through the first coating apparatus, the first drying apparatus, the second coating apparatus, the second drying apparatus, and the compensation drying apparatus.

16. The manufacturing system according to any of claims 8 to 15, further comprising:
an oven, wherein the oven comprises an upper layer section and a lower layer section, the first drying apparatus is one of the upper layer section and the lower layer section, and the second drying apparatus is the other of the upper layer section and the lower layer section.

17. The manufacturing system according to any of claims 8 to 16, wherein

the compensation drying apparatus is an infrared lamp, wherein the infrared lamp is configured to irradiate the second surface of the electrode plate.

18. A battery cell, comprising:
   at least one electrode plate manufactured by the method according to any of claims 1 to 7.

FIG. 1

200

```
                          ┌──────────┐
                          │  Start   │
                          └──────────┘
                               │
                               ▼
  ┌─────────────────────────────────────────────────────────┐     210
  │  Apply an electrode slurry to a first surface of a current │
  │  collector to form a first electrode layer on the first surface │
  └─────────────────────────────────────────────────────────┘
                               │
                               ▼
  ┌─────────────────────────────────────────────────────────┐     220
  │  Perform a first drying operation on the current collector │
  │  with the first electrode layer formed thereon to dry the first │
  │                    electrode layer                        │
  └─────────────────────────────────────────────────────────┘
                               │
                               ▼
  ┌─────────────────────────────────────────────────────────┐     230
  │  Apply the electrode slurry to a second surface of the current │
  │  collector after the first drying operation to form a second │
  │            electrode layer on the second surface          │
  └─────────────────────────────────────────────────────────┘
                               │
                               ▼
  ┌─────────────────────────────────────────────────────────┐     240
  │  Perform a second drying operation on the current collector │
  │  having the second electrode layer formed thereon to dry   │
  │  both the first electrode layer and the second electrode layer │
  └─────────────────────────────────────────────────────────┘
                               │
                               ▼
  ┌─────────────────────────────────────────────────────────┐     250
  │  Perform a compensation drying operation on the second     │
  │         electrode layer of the current collector           │
  └─────────────────────────────────────────────────────────┘
                               │
                               ▼
                          ┌──────────┐
                          │   End    │
                          └──────────┘
```

FIG. 2

300

```
                    ┌─────────────┐
                    │    Start    │
                    └──────┬──────┘
                           │
                           ▼
┌──────────────────────────────────────────────────┐
│ Obtain a first surface density sum of a first      │     310
│ electrode layer and a second electrode layer after │
│ a second drying operation and before a compensation│
│ drying operation                                   │
└──────────────────────┬─────────────────────────────┘
                       │
                       ▼
┌──────────────────────────────────────────────────┐
│ Determine relevant parameters for the compensation │     320
│ drying operation based on a first difference       │
│ between the first surface density sum and a target │
│ surface density sum                                │
└──────────────────────┬─────────────────────────────┘
                       │
                       ▼
┌──────────────────────────────────────────────────┐
│ Perform the compensation drying operation on the   │     330
│ second electrode layer of the current collector    │
│ based on the relevant parameters                   │
└──────────────────────┬─────────────────────────────┘
                       │
                       ▼
                ┌─────────────┐
                │     End     │
                └─────────────┘
```

FIG. 3

400

Start

Obtain a second surface density sum of a first electrode layer and a second electrode layer during a compensation drying operation

410

Feedback regulating relevant parameters for the compensation drying operation based on at least a second difference between the second surface density sum and a target surface density sum

420

Continue the compensation drying operation on the second electrode layer of the current collector based on the regulated relevant parameters for the compensation drying operation

430

End

FIG. 4

500

```
                    ( Start )
                        |
                        v
+-----------------------------------------------------+        510
| Obtain a third surface density of a first electrode |  ~
| layer after a first drying operation and before a   |
| second drying operation                             |
+-----------------------------------------------------+
                        |
                        v
+-----------------------------------------------------+        520
| Determine a reduced value of surface density of the |  ~
| first electrode layer during the first drying       |
| operation based on the third surface density and a  |
| fourth surface density of the first electrode layer |
| before the first drying operation                   |
+-----------------------------------------------------+
                        |
                        v
+-----------------------------------------------------+        530
| Determine the target surface density sum based on   |  ~
| at least the reduced value of the surface density   |
+-----------------------------------------------------+
                        |
                        v
                    ( End )
```

FIG. 5

FIG. 6

## INTERNATIONAL SEARCH REPORT

International application No.

**PCT/CN2023/102802**

| A. | CLASSIFICATION OF SUBJECT MATTER |
|---|---|
| | H01M4/04(2006.01)i |

According to International Patent Classification (IPC) or to both national classification and IPC

| B. | FIELDS SEARCHED |
|---|---|

Minimum documentation searched (classification system followed by classification symbols)

IPC: H01M4

Documentation searched other than minimum documentation to the extent that such documents are included in the fields searched

Electronic data base consulted during the international search (name of data base and, where practicable, search terms used)

CNTXT; ENTXT; ENTXTC; DWPI; CNKI: 电极, 极片, 涂覆, 涂敷, 烘干, 干燥, 烘烤, 补偿, 双面, 两面, electrode, coat, spread, drying, baking, double, layer, surface, supplement

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 115842085 A (NINGDE CONTEMPORARY AMPEREX TECHNOLOGY CO., LTD.) 24 March 2023 (2023-03-24) claims 1-18 | 1-18 |
| A | KR 20060111848 A (SAMSUNG SDI CO., LTD.) 30 October 2006 (2006-10-30) entire document | 1-18 |
| A | US 2004149207 A1 (MURATA MANUFACTURING CO., LTD.) 05 August 2004 (2004-08-05) entire document | 1-18 |
| A | WO 02054510 A1 (ALLIED RAY TECHNOLOGY CO., LTD. et al.) 11 July 2002 (2002-07-11) entire document | 1-18 |
| A | CN 107819105 A (HEFEI GUOXUAN HIGH-TECH POWER ENERGY CO., LTD.) 20 March 2018 (2018-03-20) entire document | 1-18 |

☑ Further documents are listed in the continuation of Box C. ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **14 September 2023** | **18 September 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/102802**

**C.    DOCUMENTS CONSIDERED TO BE RELEVANT**

| Category* | Citation of document, with indication, where appropriate, of the relevant passages | Relevant to claim No. |
|---|---|---|
| A | CN 113764610 A (EVERGRANDE NEW ENERGY TECHNOLOGY (SHENZHEN) CO., LTD.) 07 December 2021 (2021-12-07) <br> entire document | 1-18 |

Form PCT/ISA/210 (second sheet) (July 2022)

International application No.

**PCT/CN2023/102802**

| Patent document cited in search report | | | Publication date (day/month/year) | Patent family member(s) | | | Publication date (day/month/year) |
|---|---|---|---|---|---|---|---|
| CN | 115842085 | A | 24 March 2023 | None | | | |
| KR | 20060111848 | A | 30 October 2006 | KR | 101201124 | B1 | 13 November 2012 |
| US | 2004149207 | A1 | 05 August 2004 | US | 6869482 | B2 | 22 March 2005 |
| | | | | JP | 2004090617 | A | 25 March 2004 |
| | | | | JP | 4135571 | B2 | 20 August 2008 |
| | | | | CN | 1475334 | A | 18 February 2004 |
| | | | | CN | 1228177 | C | 23 November 2005 |
| WO | 02054510 | A1 | 11 July 2002 | KR | 20020055869 | A | 10 July 2002 |
| | | | | AU | 2002217605 | A1 | 16 July 2002 |
| CN | 107819105 | A | 20 March 2018 | None | | | |
| CN | 113764610 | A | 07 December 2021 | None | | | |

Form PCT/ISA/210 (patent family annex) (July 2022)

**REFERENCES CITED IN THE DESCRIPTION**

**Patent documents cited in the description**

- CN 202210988890